# EUROPEAN PATENT APPLICATION

(11) **EP 0 690 124 A2**
(43) Date of publication of application: **03.01.1996**
(21) Application number: 95108391.4
(22) Date of filing: 31.05.1995
(51) Int. Cl.: C12H 3/04

(54) **Alcohol removal procedure for alcoholic beverages and low alcoholic grading beverages obtained thereby**

(30) Priority: 02.06.1994 AR 32840294
(71) Applicant: BODEGAS Y VINEDOS SANTA ANA S.A., Guaymallen, Province of Mendoza (AR); FUNDACION UNIVERSIDAD NACIONAL DE CUYO, FUNC, Mendoza City, Province of Mendoza (AR)
(72) Inventor: Leitner, Heriberto, Mendoza (AR); Sadler, Rodolfo, Mendoza (AR)
(74) Representative: Grünecker, Kinkeldey, Stockmair & Schwanhäusser Anwaltssozietät

(57) **Abstract**

The object of the present invention is the creation of an alcohol removal procedure for alcoholic beverages, without altering the genuineness conditions of the original product.

## Description

### Antecedents of the Invention

Alcoholic products which are obtained by the fermentation of natural sugars, are characterized by a mix in different proportions of a great number or substances, which may come from the initial raw material or from the fermentation processes as main or secondary elements. Within these substances, those which acquire most importance for their proportion in the mix are water and alcohol.

Until the present date, the processes for the elimination, in whole or in part, of their alcoholic contents have been based on: evaporation of alcohol, and its separation by moans of a phase change, with total degrading of the taste characters of the alcoholic beverage, or by means of the separation of alcohol, due to its passage through a membrane, using water as vehicle, which adds a great number of substances to the alcoholic product to be processed, which modify it from the chemical, organoleptic and microbiological aspect, losing the genuineness character of the initial product.

The practical needs and the technical conditions which could not be complied by the known resources, which we shall state herein, are the reasons for the inventive creation of the present industrial procedure.
a) The membranes of the reactor, which are not selective for yeast, allow the contamination of the final product, and by multiplication thereof, a loss of residual sugars, alteration of limpidity and of its organoleptic characters, losing the genuineness characteristics of the original product.
b) As the membranes are not selective for bacteria, they allow the contamination of the final product, and by multiplication thereof, an alcohol consumption with the formation of volatile acids (acetic, lactic), modify the product, as well as its limpidity, losing the genuineness characteristics of the original product.
c) For other types of bacteria (the case of coliform bacteria) which might be present in the water which is added to the original product in order to provoke alcohol stripping, as the membranes are not selective, they allow their presence (in some cases) in the final product with no alcohol contents, with risks for human health, losing the asepsis characteristics of the original product.
d) As the membranes are not selective for algae and clays, they allow the contamination of the original product, with loss of its genuineness, as well as an accelerated exhaustion, due to membrane plugging.
e) As the membranes are not selective for chemical contaminating agents, they allow the modification of the final product, losing the genuineness characteristics of the original product.
   Hereinafter we state a list of the chemical contaminants which might be incorporated by the water added to provoke alcohol stripping, and, as it remains in the final product, it may alter and modify its genuineness characteristics.
Chlorine: chloride formation, producing color alterations.
Chrome: modification of the food and physiological requirements of the product.
Lead: modification of the food requirements.
Mercury and Cadmium: modification of the requirements for food products.
Iron: modification of the organoleptic characters and compound formation which alter the limpidity of the final product (ferric phosphate).
Sodium and Potassium: modification of the organoleptic characters of the final product, due to the formation of saline compounds and compounds which alter limpidity.
Calcium: modification of the organoleptic characters due to the combination with natural organic acids and precipitation of the corresponding salts.
Carbonates: Modification of the characteristics of the original product due to alkalinity increase and pH modification.
Sulfates: modification of the organoleptic characters of the initial product and salt formation which alters limpidity.
Phosphates: modification of the characters of the initial product, originating precipitations which alter limpidity.
Nitrates, nitrites and ammonium: the presence of those contaminants show alterations of biological origin.

For example, evaporation is known in alcohol removal. This thermal procedure potentially assumes the same objective as inverse osmosis; but the phase changes which occur in the product, that is, the passage from the liquid phase to vapor, provoke undesired phenomena, like the appearance of bad taste due to heat (burned taste) and flavor loss and / or modification, with the elimination of the alcoholic vapors of the product (Cuénat and others, 1986. International O.I.V. Congress, Santiago de Chile).
By means of the practical applications of the invention, the following advantages may be obtained, which eliminate the practical difficulties and the technical conditions which are not complied by the known resources, obtaining the elimination of:
a) yeast: by means of filtration with sterile filtration plates, absolute retention cartridges, ultraviolet radiation and silver ionization.
b) bacteria: by means of filtration with sterile filtration plates, absolute retention cartridges, ultraviolet radiation and silver ionization.
c) algae and clays: by means of filtration with nominal filtration cartridges.
d) chrome, lead, iron, calcium, sodium, potassium, mercury and cadmium: to be withheld in a first stage by a magnetic conditioner, and then by anionic and cationic resins in mixed bed.
e) chlorine: to be eliminated by means of an activated carbon bed.
f) sulphates, carbonates, phosphates, nitrates, nitrites and ammonium: in a first stage they will be withheld by a magnetic conditioner, and then by a mixed bed resin exchanger.

The object of the present invention, an alcohol removal procedure for alcoholic beverages, especially for beverages resulting from sugar fermentation, preserving the characteristics and genuineness conditions of the original product, characterized because it includes:
mixing the beverage for alcohol removal, which has been previously purified by filtration in sterilization plates in order to reduce the microbial layer, diluting said beverage in chemically and microbiologically purified water, in a volumetric relation of 1:10 to 1:1, and submitting said mix to a fractionation operation by inverse osmosis, against 2pa with the above mentioned chemical and microbiological purity characteristics, under pressures of 20 to 50 bars, and temperatures between 10 and 30 degrees C, and recover a first fraction, which corresponds to an alcoholic solution, the alcohol removed from the processed beverage in 2pa chemically and microbiologically purified water.

Another object of said invention, an alcohol removal procedure for alcoholic beverages, especially for beverages resulting from sugar fermentation, preserving the characteristics and genuineness conditions of the original product, in agreement with claim 1, characterized because it includes:
mixing the beverage for alcohol removal, previously filtered by sterilization plates in order to reduce its microbial layer, with chemically and microbiologically purified water, in a volumetric relation of 1:10 to 1:1, and submitting said mix to a fractionation operation by inverse osmosis, against water with the above mentioned characteristics, under pressures of 20 to 50 bars, at temperatures between 10 and 30 degrees C, and
recover a first fraction, which corresponds to the beverage with no alcohol contents, and a second fraction which corresponds to an hydroalcoholic solution, which contains the alcohol removed from the processed beverage,
being the above mentioned chemically and microbiologically purified water, drinking water previously treated in filtration cartridges, in order to withhold the algae and inorganic particles in suspension, and then partially demineralized by magnetic conditioning, sufficient to reduce conductivity to values not exceeding 600-800 microsiems and "a posteriori" in sequence the demineralized water resulting from the preceding stage is (i): treated with ionic exchange resins in order to reduce the anion and cation contents, and to bring conductivity to values not exceeding 20 - 50 microsiems, ii) biologically purified by means of filtration plates and cartridges, in order to withhold residue microflora and to reduce the count to values from 1 to 10 microorganisms / field, and iii) sterilize the water emerging from the previous stage, by UV radiation chemical sterilization by bacteriostatic effect of "in situ" ionized silver.

### Description in detail of the invention

Hereinafter we describe the technical resources and the equipment used to solve the outlined problems in detail, as well as their use in this procedure.
The water is taken by a stainless steel pump, of sanitary characteristics, this type of pumps, due to their characteristics, is used to perform all types of movements in the whole line.
Said water is cant to a nominal filtration cartridge, to provoke the retention of algae, organic matter, sand and clay particles, which the water might contain, working pressure in this case should be between 0,200 and 1,200 kgs / sq. cm. with temperatures between 5 and 25 degrees C. Then it goes to a magnetic water conditioner, and this equipment performs electrostatic conditioning, by load elimination, in order to provoke its predemineralization, reducing conductivity values from 1.300 - 1.400 microsiems to values of 600 to 800 microsiems. With flow speeds of 4.000 to 5.000 liters / hour.
Therefrom the water goes into a mixed bed of anionic and cationic exchange resins, for demineralization, the work speed in this case in 4.000 to 5.000 liters / hour, under pressures of 300 to 800 grams / sq. cm.
Demineralization is verified by means of measurings with a line conductimeter, which measures the electric load of the water, expressed in microsiems, in this case the values will lie between 10 to 20 microsiems.
The cationic exchange resins will withhold: calcium, sodium, potassium, magnesium, iron, chrome, mercury, lead, cadmium, etc. The anionic exchange resins will withhold carbonates, sulphates, silicates, phosphates, chlorides, nitrates, nitrites, ammonium, etc.
For the case of water with chlorine contents, we use an activated carbon bed, to withhold said compound.
The water in these conditions is collected in a stainless steel tank of sanitary conditions, and from here it is pumped towards a plate filter by a stainless steel pump, of sanitary conditions as well, and this filter partially withholds the present microbial flora. The capacity of this filter is 4.000 to 5.000 liters / hour, with a pressure of 0,400 to 1.700 kgs / sq. cm.
From this filter the water passes to an absolute cartridge, which withholds almost all present microorganisms, and the flow speed is 4.000 to 5.000 liters / hour, with pressures of 200 to 800 grams / sq. cm. The microbial population in this case should not exceed 1 to 2 microorganisms per field, count and incubation in culture medium.
After leaving the cartridge, it flows into an ultra violet radiation water sterilization equipment. This is the electromagnetic radiation of a wave length which is below the visible spectrum, and above X rays. This radiation is produced by a low pressure mercury lamp, which has the type of crystals which allows the passage of a ray of light which has the faculty to destroy all microorganisms exposed to it. The water goes into the sterilization chambers of the equipment, where it is irradiated by powerful UV rays, which go through its mass in movement. In this manner the UV rays collide against the bacteria, yeasts, algae and virus, braking their outer membrane and reaching the nucleus of the microorganism, known as ADN, and destroys it.

Then it flows into a silver ionization equipment. By means of the action of silver, this equipment produces the destruction of microorganisms based upon the action of this element on cellular matter, coagulating proteins. In those concentrations (0.015 p.p.m), the silver ion does not communicate taste nor any other type of toxicity.
Its residual power cannot volatilize. In a first encounter with pathogen organisms, a fraction of the ions is neutralized. Residue silver maintains its power and protects the water for long periods of time.
The work flow of the ultraviolet radiation equipment, as well as the silver ionizator, is of 4.000 - 5.000 liters / hour.
Its cleanness is tested by a line turbidimeter. This instrument is used to measure any light deviation on particles which are larger than one molecule, which guarantees the correct work of the filtration devices.
The turbidity values determined in our case lie between 0,1 to 0,01 NTU.
The water in these conditions is kept in stainless steel tanks, to be used later on.
The product to be processed for alcohol removal flows into a stainless steel tank, from whore it is taken by a sanitary pump and forwarded to a sterilization plate filter, a filtration equipment which allows the retention of the microbial load contained in the original product. The work pressure of this filter lies between 0.500 and 2.000 kgs / sq. cm.
Then it is deposited in stainless steel tanks, and mixed with the water obtained by means of the above mentioned procedure, in a proportion of one part of the product to be processed for alcohol removal with three parts of treated water.
This mixture goes into the inverse osmosis equipment.
Osmosis is the transference of a solvent (water in most cases) through a membrane by the action of a concentration gradient.
Considering a system with two compartments separated by a membrane of selective permeability, containing two solutions of different concentrations, the osmosis phenomenon will be performed by a directed water flow of the diluted solutions towards the concentrated solution.
If the water flow is stopped, applying pressure on the concentrated solution, the quantity of transferred water will diminish, and at a certain moment the pressure applied will be such, that the flow will stop, and said pressure value will be equal to the osmotic pressure.
The increase of the pressure to a level exceeding the equilibrium level (osmotic pressure) will translate into a water flow directed in inverse sense to the osmotic flow, that is, from the concentrated solution towards the diluted solution: this is the phenomenon of inverse osmosis, which has been discovered by Reid, at the University of Florida, United States of America, described in a paper on salt removal of sea water.

Alcohols have solvation properties close to those corresponding to water, and pass through the membranes without difficulty, the rejection degree increases with the molecular mass of alcohol.
The selectivity of an inverse osmosis membrane for a given compound will be more important according to the larger contents of solvent (water in our case).
The basis material is cellulose, in which one or more hydroxyl groups are replaced by acetate groups, creating cellulose acetate membranes.
The applications of inverse osmosis in practice are very recent. In 1987 Cuenat and Kobet began the studies on inverse osmosis practice, and recently its use in the food industry has been found.
In our case the inverse osmosis equipment will provoke the total and complete separation of the water added to the initial product, and the separation in whole or in part of the alcohol from the product treated for alcohol removal, and all substances with molecular weight above 150 Dalton will be withheld, with an 99,99% efficiency, which guarantees the genuineness of the initial product, with the only difference of the decrease of the initial alcohol contents, and a density increase, as a consequence of alcohol elimination.
The work pressure in the inverse osmosis equipment is 35 to 40 bars, with temperatures between 20 and 28 degrees C. This is because the membranes are thermospecific, and work temperature should never exceed 35 grades C. In case this should happen, a heat exchanger is activated, which lowers the temperature.
After its alcohol removal, the product is stored in stainless steel tanks with inert nitrogen atmosphere, ready for packaging. The alcohol - water mix is separately received in stainless steal tanks, and due to its chemical, microbiological and organoleptic characteristics, it may be used as basis for other beverages of low alcohol contents.
The following examples illustrate the invention. Therein we take wine into consideration as alcoholic beverage, as this is a product of high chemical complexity, susceptible to evidence any change in its organoleptic and chemical characters. Through the obtained results, the conclusions may be transferred to any other type of alcoholic beverage for human consumption.
Wine is composed by a multiphase substance system, some pro-exist in the initial must, and others originate from its sugars in the course of the fermentation process, and by collateral fermentations.

### Example 1

Analytical data of the water used:
Total hardness (C03Ca): 626 p.p.m
Alkalinity to bicarbonates (C03Ca): 255 p.p.m.
Alkalinity to hydroxides (C03Ca): 000 p.p.m.
Dry residue (at 105 degrees C): 1290 p.p.m.
Chlorides (Cl-): 113 p.p.m.
Sulphates (S04=): 482 p.p.m.
Bicarbonates (C03H-): 311 p.p.m.
Calcium (Ca++): 196 p.p.m.
Magnesium (Mg++): 33 p.p.m.
Alkalis (Na+, K+): 135 p.p.m.
pH : 6.90
- Microbiological:: Total positive count. Presence of yeasts, moss, bacteria and algae.
- Remarks:: Positive silica qualitative determination. Presence of clays.
- Chloride:: Negative reaction to orthotolidine.
- Electric conductivity at 25 degrees:: 1412 microsiems.
- Physical characteristics:: Clear aspect.
- Odor:: odorless
- Color:: colorless
- Taste:: tasteless
The quantity of used water is 1.000 liters, which are taken by a pump and sent to a nominal 50 micron cartridge. Then the water passes through a magnetic conditioner, and from there to the mixed resin bed. This process is performed at a flow speed 4.000 liters / hour. The obtained water has the following characteristics:
Total hardness (C03Ca): 000 p.p.m
Alkalinity to bicarbonates (C03Ca): 55 p.p.m.
Alkalinity to hydroxides (C03Ca): 000 p.p.m.
Dry residue (at 105 degrees C): 21 p.p.m.
Chlorides (Cl-): 000 p.p.m.
Sulphates (S04=): 001 p.p.m.
Bicarbonate (C03H-): 000 p.p.m.
Calcium (Ca++): 000 p.p.m.
Magnesium (Mg++): 000 p.p.m.
Alkalis (Na+, K+): less than 01 p.p.m.
pH : 7.1

- Microbiological:: Presence of yeasts and bacteria.
- Remarks:: Negative qualitative silica.

In these conditions, the water is stored in a sanitary stainless steel tank.
The water is again taken by a sanitary pump and flows into a sterile plate filter, where most of the present microorganisms are withheld (tested by culture analysis), no more than 10 to 20 microorganisms per field.
Then the water flows to an absolute 0.20 micron retention cartridge, which provokes the retention of practically all present microorganisms in values of 1 or 2 per field.
Then the water goes to an ultra violet radiation sterilization equipment, and then to a silver ionization equipment, obtaining microbiologically ultrapure water, with the above described chemical characteristics. This water is received in a stainless steel tank, where it is stored until further use.

On the other side, 500 liters of wine are deposited in a stainless steel tank, the specifications of the wine are listed in Table 1, from there it is taken by a sanitary pump and sent to a sterilizing plate tank, and the pore diameter of said plates is 0.7 microns. Said process provokes the retention of all microorganisms present in the wine.
Then the wine is deposited in a stainless steel tank, and mixed with the 1000 liters of treated water, and is perfectly homogenized.
This mix goes to an inverse osmosis equipment, where the separation of the alcohol from the water, which has been incorporated to the initial product, takes place.
The work temperature in this equipment was 24 degrees C, with a 38,5 bar pressure.
The obtained volume of the partially alcohol removed initial product, was 470 liters.
The volume of water obtained, containing the stripped alcohol, was 1030 liters.
The time required for the process was 22 minutes.
The analytical data of the wine, with partial alcohol removal, are listed in Table 1.

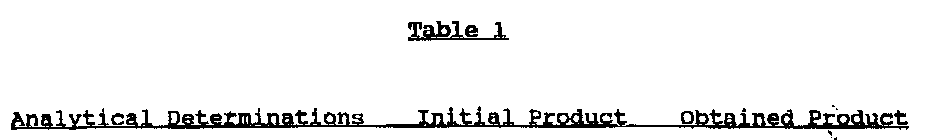

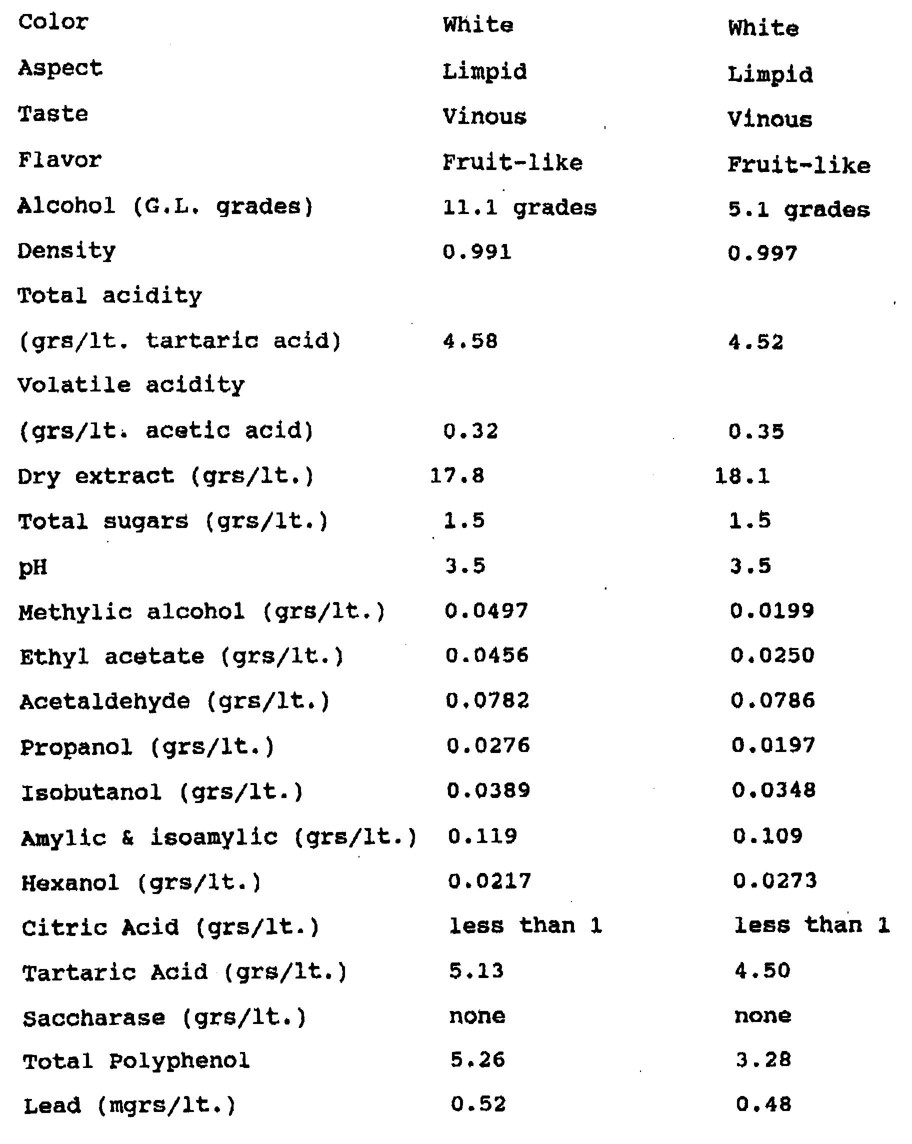

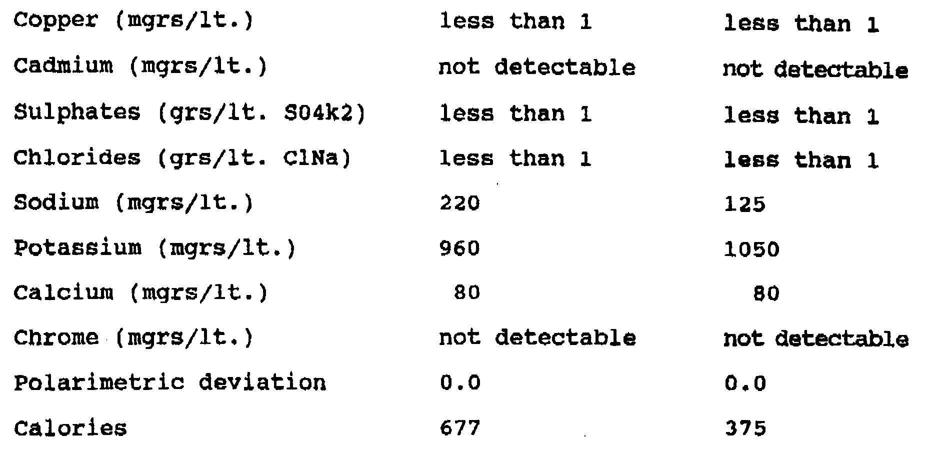

As may be observed in the analytical data, both analyzed samples correspond faithfully, with the only difference of their alcohol contents, and therefore, their density, as consequence of the reduced alcohol values.
Both samples have been tested with several panels of tasters, and no great differences in their organoleptic properties have been determined, and the non alcoholic product has the characteristics of a fresh and fruit-like product.

### Trial 2

In the following trial we use the same type of water as in the prior example. Therefore, we take the same analytical data into consideration, as its treatment was the same one performed and described above. For this trial 5.000 liters of this water have been used.
In this case the volume of the product for alcohol removal (wine) was 2.500 liters.
The initial filtration process is identical to the above described example.
The analytical data of the initial product is shown on Table 2. The wine and the treated water are mixed in a stainless steel tank. Said mix is sent to the inverse osmosis equipment.
Work pressure is this trial was 35 bars, and the temperature 25 degrees C.
The treatment was performed in 93 minutes.
The data obtained from the partially alcohol removed wine are listed in Table 2.

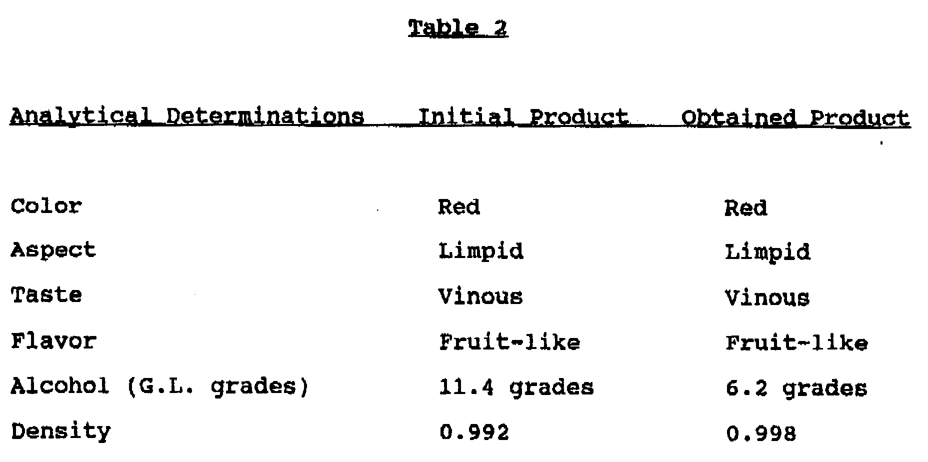

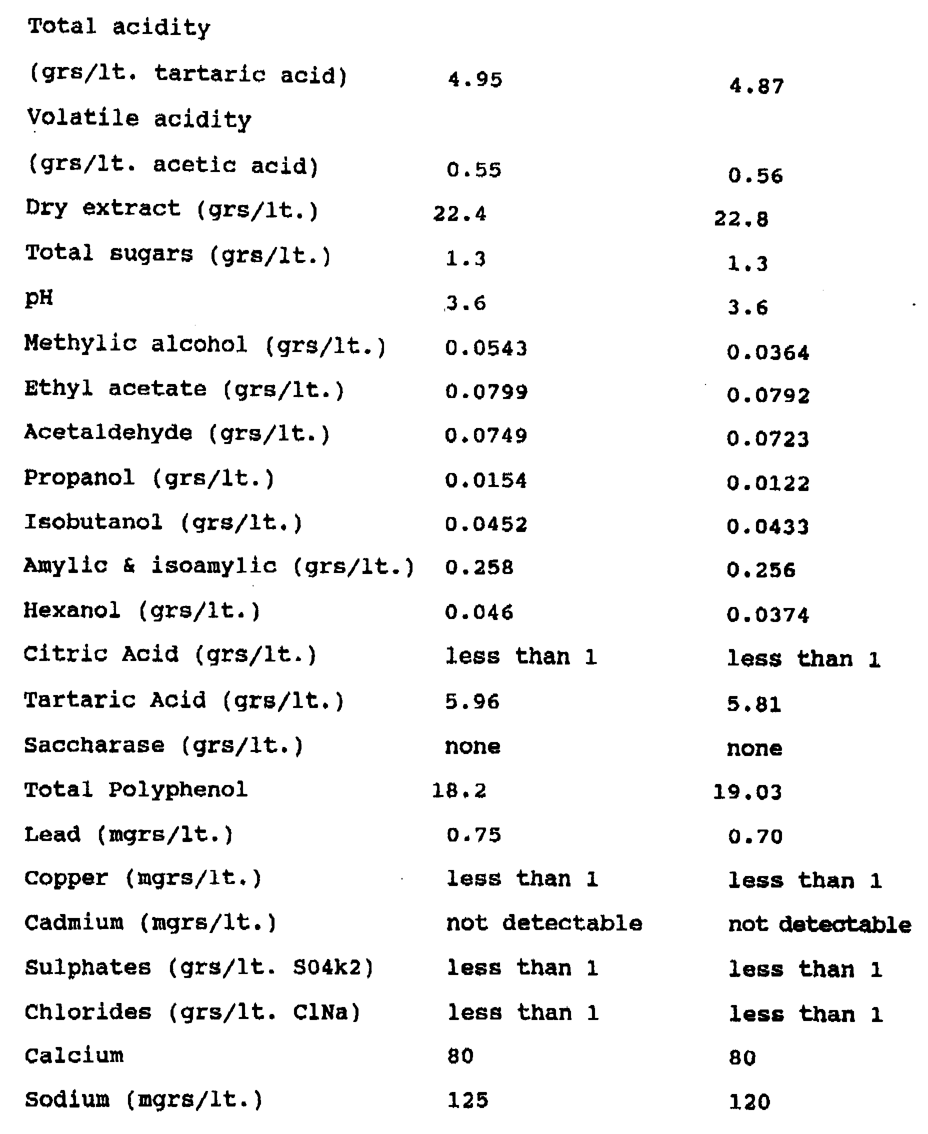

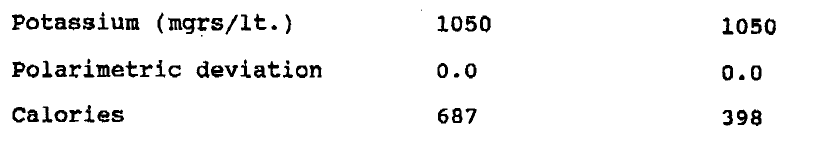

As may be observed in the analytical data, both analyzed samples correspond faithfully, and the most important differences lie in their alcohol contents, and density.
Both samples have been tasted, and no great differences in their organoleptic characters have been determined. Some tasters determined a lack of body in the alcohol removed sample, when it is taken to the mouth, due to the alcohol contents decrease.
However, the treated wine is fresh, fruit-like, with no important variations with respect to the original wine.

### Trial 3

The water which has been used has the following analytical data:
Total hardness (C03Ca): 450 p.p.m
Alkalinity to bicarbonates (C03Ca): 180 p.p.m.
Alkalinity to hydroxides (C03Ca): 000 p.p.m.
Dry residue (at 150 degrees C): 583 p.p.m.
Chlorides (Cl-): 180 p.p.m.
Sulphates (S04=): 450 p.p.m.
Bicarbonates (C03H-): 280 p.p.m.
Calcium (Ca++): 160 p.p.m.
Magnesium (Mg++): 25 p.p.m.
Alkalis (Na+, K+): 120 p.p.m.
pH : 6.70 Free chloride: 15 p.p.m.
- Microbiological:: Grahm positive (from 2 to 4 per plate)
- Remarks:: Presence of clays and algae
Electric conductivity at 25 degrees C: 980 microsiems.
Physical characteristics: limpid, clear, colorless, with chloride flavor.
The used water is passed through an activated carbon bed, in order to obtain water without any chloride flavors.
Then the water is taken by a sanitary pump, and sent to a nominal 50 micron cartridge. Then it passes through a magnetic conditioner, and from there to the mixed resin bed. This process is performed at a 4000 lts / hour flow speed. The obtained water has the following characteristics:
Total hardness (C03Ca): 000 p.p.m
Alkalinity to bicarbonates (C03Ca): 55 p.p.m.
Alkalinity to hydroxides (C03Ca): 000 p.p.m.
Dry residue (at 105 degrees C): p.p.m.
Chlorides (Cl-): 000 p.p.m.
Sulphates (S04=): 000 p.p.m.
Bicarbonates (C03H-): 000 p.p.m.
Calcium (Ca++): 000 p.p.m.
Magnesium (Mg++): 000 p.p.m.
Alkalis (Na+, K+): 000 p.p.m.
pH : 7.1
- Microbiological:: Grahm positive ( 4 - 8 fields )
- Remarks:: Negative quail- quantitative silica.
In these conditions the water is stored in a sanitary stainless steel tank.
The water is again taken by a sanitary pump, and goes to a filter with sterile plates, where most part of the present microorganisms is withheld (tested by means of culture analysis), no more than 1 - 2 microorganisms per field. The water goes to an absolute 0.20 micron retention cartridge, which provokes the retention of almost all present microorganisms, in values of 0 to 1 per field.
Thereafter the water goes to an ultraviolet radiation sterilization equipment, and then to a silver ionization equipment, obtaining microbiologically ultra - pure water, with the above mentioned chemical characteristics.
This water is received in a stainless steel tank, stored until its further use.
For the performance of the trial 5000 liters of this water have been used.
The volume of the product for alcohol removal (wine) in this case was 2500 liters.

The initial filtration processes are identical to the previous example.
The analytical data of the initial data are shown in Table 3. The treated water is mixed with the wine in a stainless steel tank. Said mix is sent to the inverse osmosis equipment. The work pressure for this trial was 38 bars, at a 21 degree C temperature.
The treatment has been performed in 120 minutes.
The obtained data of the partially alcohol removed wine is listed in Table 3.
The volume of the partially alcohol removed product was 2350 liters, and the obtained volume of water - alcohol was 5150 liters.

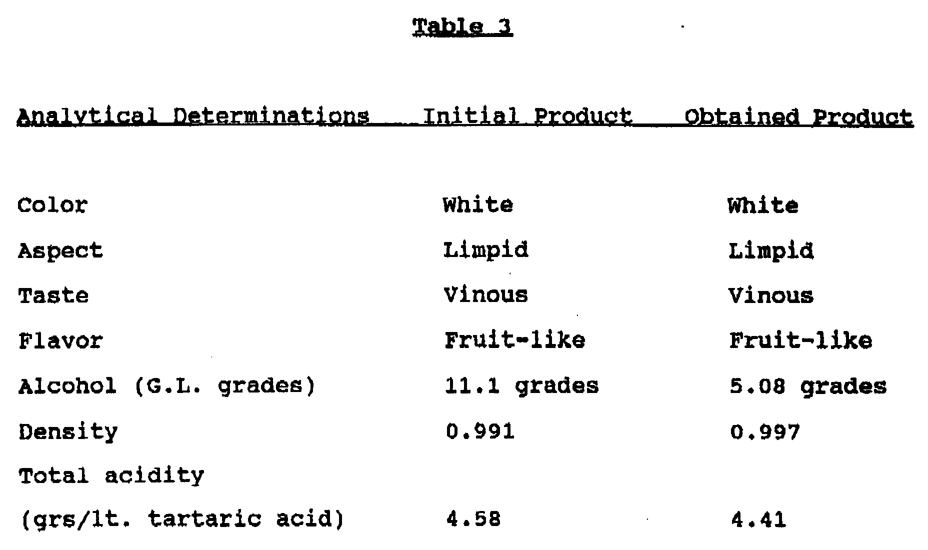

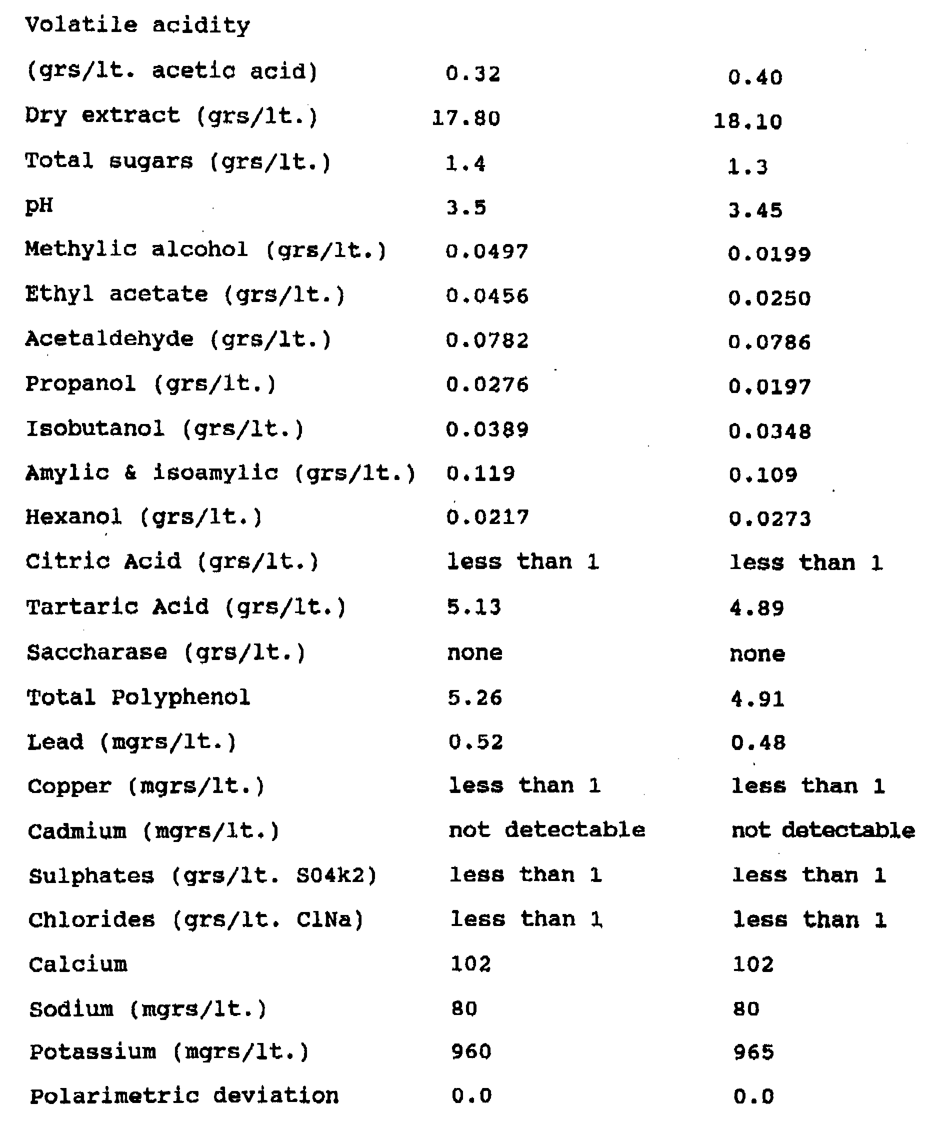

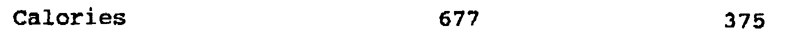

As may be observed in the analytical data, both analyzed samples correspond faithfully, and the most important differences lie in their alcohol contents, and density.
The samples have been tasted by a panel of tasters, and no great differences in their organoleptic characters have been determined.

### Example 4

In the following example cider has been used as product for alcohol removal. This product is obtained by the fermentation of the natural sugars contained in apple juice.
In the following trial we use the same type of water as in the prior example. Therein we consider the same analytical data, as the performed treatment was the same as described above. For the performance of this trial 700 liters of this water have been used.
The volume of the product for alcohol removal (cider) in this case was 500 liters.
The initial filtration processes are identical as for the above example.
The analytical data of the initial product is listed in Table 4. Cider is mixed with the treated water in a stainless steel tank. Said mix is sent to the inverse osmosis equipment. The work pressure is said trial was 38 bars, at a temperature of 21 degrees C.
The volume of the partially alcohol removed product was 480 liters, and the volume of water - alcohol was 720 liters.

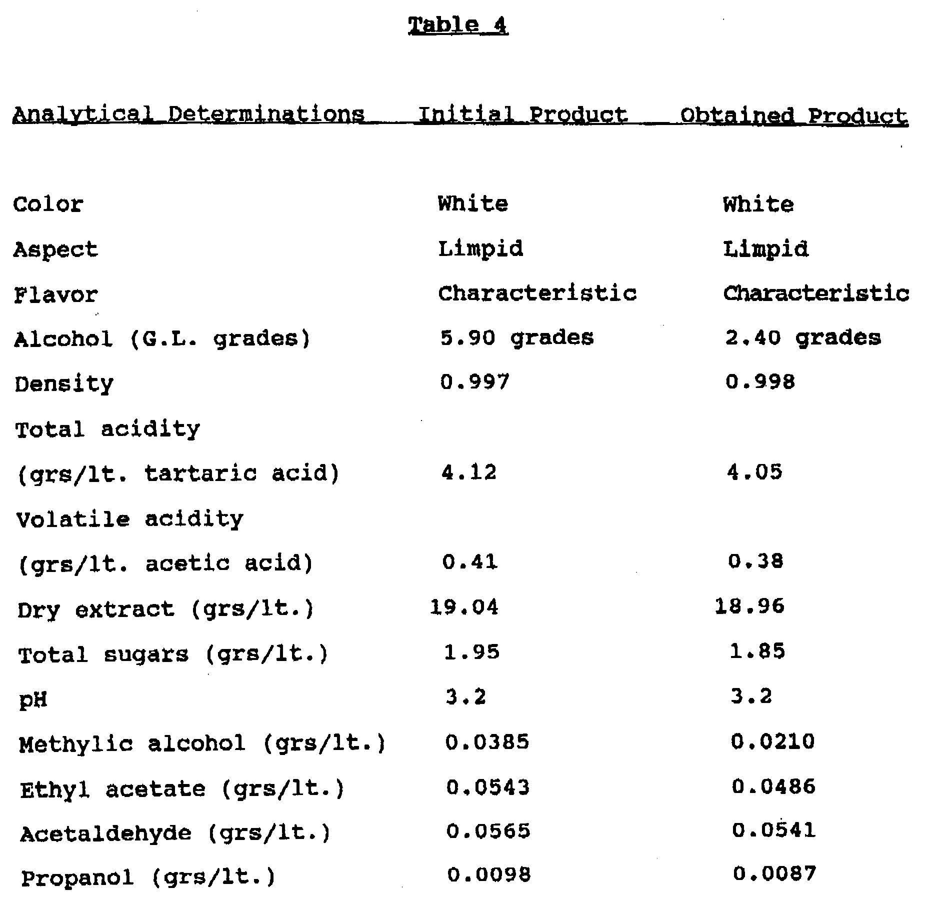

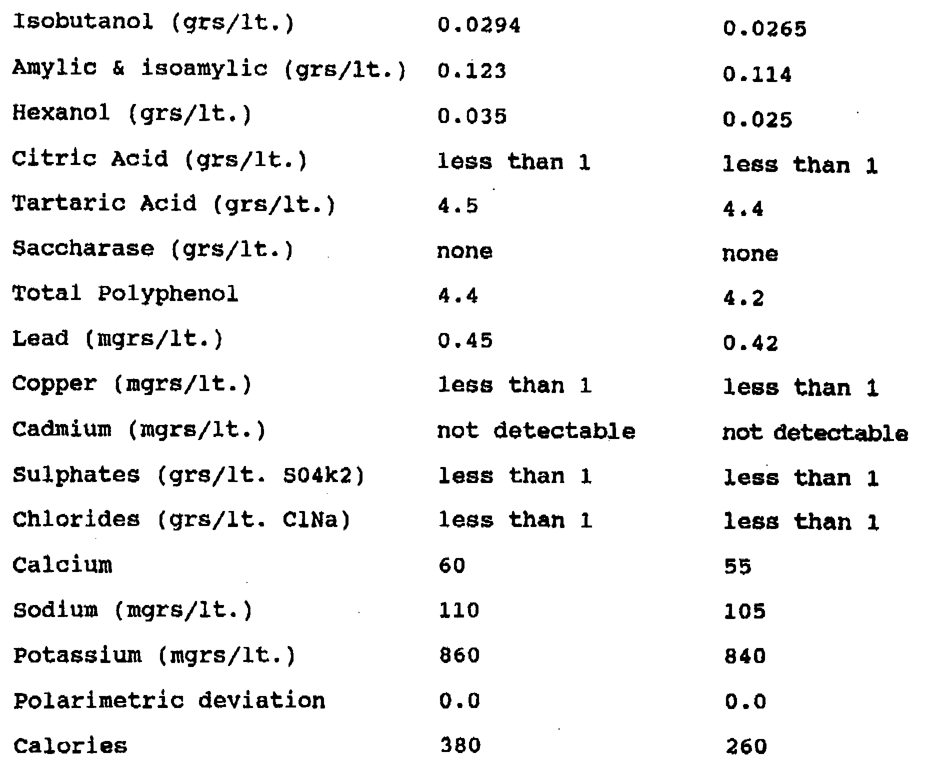

As may be observed in the analytical data, both analyzed samples correspond faithfully, and the analytical differences lie in their alcohol contents, and density.
The samples have been tasted, and no great differences in their organoleptic characters have been determined.
In the alcohol removed sample some tasters observed that the natural apple flavors were enhanced.

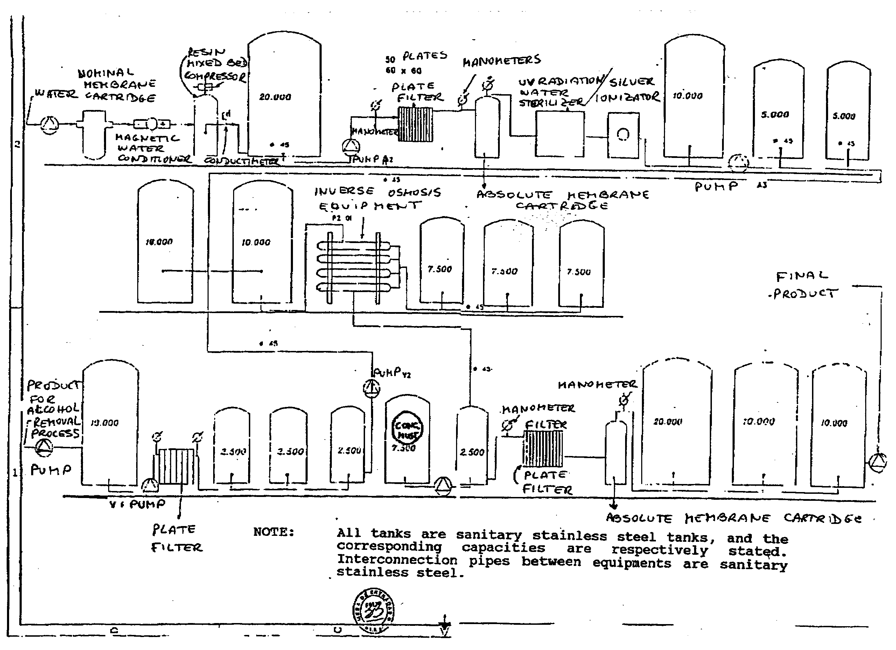

## Claims

1. A procedure for alcohol removal from alcoholic beverages, especially beverages obtained from sugar fermentation, retaining the genuineness characteristics and conditions of the original product, characterized because it includes:
mixing the beverage to be processed for alcohol removal, previously purified by filtration in sterilization plates, to reduce the microbial layer, diluting said beverage with chemically and microbiologically purified water, in a volumetric relation of 1:10 to 1:1, and the above mentioned mix will be subject to an inverse osmosis fractioning operation, against 2pa with the above mentioned chemical and microbiological purity characteristics, under pressures of 20 to 50 bars, and temperatures between 10 and 30 degrees C, and the recovery of the first fraction, constituted by the alcohol removed beverage, and a second fraction, constituted by a hydroalcoholic solution, of the alcohol stripped from the beverage processed in 2pa of chemically and microbiologically purified water.

2. Alcohol removal procedure for alcoholic beverages, especially beverages obtained by sugar fermentation, retaining the genuineness conditions and characteristics of the product, as stated in claim 1, characterized because it includes:
mixing the beverage to be processed for alcohol removal, previously filtered by sterilization plates, in order to reduce its microbial load, with chemically and microbiologically purified water, in a 1:10 to 1:1 volumetric relation, and the above mix will be subject to an inverse osmosis operation against the water of the above mentioned characteristics, under pressures of 20 to 50 bars, and temperatures between 10 to 30 degrees C, and recovering a first fraction, which corresponds to an alcohol removed beverage, and a second fraction which corresponds to an hydroalcoholic solution, containing the alcohol removed from the beverage which has been processed, the water mentioned above being chemically and microbiologically purified, drinking water previously treated in filtration cartridges, for the retention of algae and inorganic suspended particles, and partially demineralized by magnetic conditioning, enough to reduce conductivity to values not exceeding 600 - 800 microsiems, and "a posteriori" in sequence the water obtained by the preceding stage, is i) treated with ionic exchange resins in order to reduce the contents of anions and cations, and to bring conductivity to values not exceeding 20 - 50 microsiems, ii) biologically purified by means of filtration plates and cartridges, to retain residual microflora and reduce the count to values between 1 and 10 microorganisms per field, and iii) sterilize the water which emerges from the prior stage, by UV radiation, chemical sterilization by bacteriostatic effect of the "in situ" ionized silver, recovering the above mentioned chemically and microbiologically purified water, its turbidity lying between 0.1 and 0.01 NTU.

3. Procedure in agreement with claims 1 and 2, characterized because the treatment with ionic exchange resins is performed in mixed bed.

4. Procedure in agreement with claims 1 and 2, characterized because the beverage to be processed for alcohol removal is 12 degree wine, and the inverse osmosis operation is performed at 35 - 40 bars, and at temperatures between 20 and 28 degrees C.

5. Procedure in agreement with claims 1 and 2, characterized because the beverage to be processed for alcohol removal is wine, and in stage ii) the conditions do not exceed 1 - 2 microorganisms per field.

6. Procedure in agreement with claims 1 and 2, characterized because the beverage to be processed for alcohol removal is 11,1 degree wine, and an alcohol removed 5,1 degree wine is obtained by inverse osmosis fractioning, with 9 genuine characteristics of the original wine.

7. Procedure in agreement with claims 1 and 2, characterized because optionally, after the ionic exchange operation, the water ii) is treated with an activated carbon bed.

8. Alcoholic beverages, especially beverages obtained from sugar fermentation, of reduced alcohol grading characterized because these are alcoholic beverages obtained by alcohol removal from beverages with higher alcohol grading, according to the procedures described in claims 1 and 2, with the genuineness characteristics of the original beverage.
